(19) Europäisches Patentamt

European Patent Office

Office européen des brevets

(11) **EP 1 077 448 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G10L 15/04*** *(2006.01)*

(21) Anmeldenummer: **00117171.9**

(22) Anmeldetag: **10.08.2000**

(54) **Spracherkennung unter Berücksichtigung der Lautstärkeschwankungen**

Speech recognition taking into account fluctuations of loudness

Reconnaissance de la parole prenant en compte les fluctuations du volume sonore

(84) Benannte Vertragsstaaten:
**DE ES FR GB IT**

(30) Priorität: **18.08.1999 DE 19939102**

(43) Veröffentlichungstag der Anmeldung:
**21.02.2001 Patentblatt 2001/08**

(73) Patentinhaber: **SIEMENS AKTIENGESELLSCHAFT
80333 München (DE)**

(72) Erfinder:
• **Bauer, Josef, Dipl.-Ing.
80797 München (DE)**
• **Junkawitsch, Jochen, Dipl-Ing.
80809 München (DE)**

(56) Entgegenhaltungen:
**EP-A- 0 690 436 EP-A- 0 817 167**

## Beschreibung

Die vorliegende Erfindung betrifft ein Verfahren und eine Anordnung zum Erkennen von Sprache.

Verfahren zum automatischen Erkennen von Sprache werden in Spracherkennungssystemen eingesetzt. Anwendungen von Spracherkennungssystemen sind z.B. Diktiersysteme oder automatisch arbeitende Telefonvermittlungen.

Bei bisher bekannten Verfahren zum automatischen Erkennen von Sprache werden durch Nebengeräusche häufig Erkennungsfehler verursacht. Bei diesen Nebengeräuschen unterscheidet man zwei Arten, nämlich die Sprache eines weiteren Sprechers, die zwar meistens korrekt erkannt wird, aber dem Sprachsignal des eigentlichen Sprechers nicht zugeordnet werden sollte, und ein kein Sprachsignal darstellendes Nebengeräusch, wie z.B. Atemgeräusche, das fälschlicherweise als Sprache erkannt wird.

Die Nebengeräusche stellen eine erhebliche Fehlerquelle bei der automatischen Erkennung von Sprache dar.

Zur Vermeidung derartiger Fehler werden Spracherkennungssysteme auf die Sprechweise der einzelnen Sprecher trainiert, so daß das Spracherkennungssystem feststellen kann, ob das akustische Signal vom Sprecher stammt oder ein Nebengeräusch ist. Spracherkennungssysteme mit häufig wechselnden Sprechern können nicht auf jeden einzelnen Sprecher trainiert werden. So ist es unmöglich, bei einem in eine Telefonanlage integrierten Spracherkennungssystem mit jedem Anrufer eine mehrere Minuten dauernde Trainingsphase durchzuführen, bevor er seine Nachricht sprechen kann, die oftmals nur Bruchteile einer Minute dauert.

Das Dokument EP 0 817 167 A2 lehrt ein weiteres Spracherkennungsverfahren zur Vermeidung derartiger Fehler, bei dem eingehende Sprachsignale über eine Vorverarbeitungseinheit einer Spracherkennungseinheit zugeleitet werden. Dort werden sie einem Spracherkennungsprozess unterworfen, wobei mittels der Vorverarbeitungseinheit die eingehenden Sprachsignale einer Merkmalsextraktion, einer Segmentierung und einer Klassifizierung nach dem Energiegehalt unterzogen werden. Hiernach werden nur diejenigen Segmente weiter verarbeitet, deren Energiegehalt einen vorgegebenen oder adaptiv ermittelten Energieschwellenwert überschreitet. Um hierbei eine möglichst robuste Spracherkennung durchzuführen und um den eigentlichen Spracherkenner zu entlasten, wird in dem Dokument vorgeschlagen, dass diejenigen Segmente, deren Energiegehalt den vorgegebenen oder adaptiv ermittelten Energieschwellenwerte überschreiten, anschließend daraufhin untersucht und klassifiziert werden, ob sie aus einem Sprachsignal oder einem Nicht-Sprachsignal abgeleitet sind. Nur die als aus einem Sprachsignal abgeleitet klassifizierten Segmente werden weiter verarbeitet.

Demnach ist es die **Aufgabe** der vorliegenden Erfindung, ein Erkennen von Sprache zu ermöglichen, wobei durch Nebengeräusche erzeugte Erkennungsfehler verringert werden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Erfindung wird ein Verfahren zum Erkennen von Sprache angegeben, bei dem anhand von Wortgrenzen Wörter und Pausen in der Sprache bestimmt werden. Es wird eine mittlere Ruhelautstärke (Si-Level) während der Pausen ermittelt. Auch wird eine mittlere Wortlautstärke (Wo-Level) für die Wörter ermittelt. Weiterhin wird eine Differenz ($\Delta$) zwischen der mittleren Wortlautstärke (Wo-Level) und der mittleren Ruhelautstärke (Si-Level) bestimmt. Sprache wird erkannt, falls die Differenz ($\Delta$) zwischen der mittleren Wortlautstärke (Wo-Level) und der mittleren Ruhelautstärke (Si-Level) größer als ein vorbestimmter Schwellwert (S) ist. Ansonsten wird keine Erkennung der Sprache in diesem Bereich durchgeführt.

Die Differenz $\Delta$ bildet einen Lautstärkenabstand zwischen den gesprochenen Wörtern und den Geräuschen in den Pausen. Ist der Lautstärkenabstand eines erkannten Wortes zu gering, wird es als nicht korrekt erkanntes Wort bewertet. Es wird somit festgestellt, ob ein Wort einen vorbestimmten Lautstärkenabstand zum übrigen Geräuschpegel besitzt. Hierbei wird der Umstand ausgenutzt, daß Nebengeräusche, die bei herkömmlichen Verfahren zum automatischen Erkennen von Sprache häufig zu fehlerhaften Erkennungen führen, leiser als die vom Sprecher gesprochenen Wörter sind. Diese Nebengeräusche können mit der Erfindung einfach ausgefiltert werden, unabhängig davon, ob sie Wörter enthalten oder Geräusche sind, die kein Sprachsignal darstellen.

Das erfindungsgemäße Verfahren kann zudem sehr einfach realisiert werden, da lediglich die mittlere Lautstärke über Teile des zu analysierenden Sprachsignalabschnittes bestimmt werden muß. Als Lautstärke im Sinne der Erfindung wird jede physikalische Größe verstanden, die etwa proportional zur physikalischen Lautstärke ist, die in Dezibel gemessen wird. Hierzu proportionale Größen sind die Energie des akustischen Signals bzw. eines korrespondierenden elektrischen Signals und insbesondere deren elektrische Größen, wie z.B. die Spannung oder der Strom.

Insbesondere ist es bei der Erkennung von Sprache wesentlich, daß die richtigen Äußerungen des richtigen Sprechers erkannt werden. Dies ist insoweit problematisch, als ein Umgebungsgeräusch, in dem deutlich Sprachbestandteile enthalten sind, von einem System zur Erkennung von Sprache derart aufgefaßt werden können, als stammten sie von dem Sprecher von dem die tatsächlich zu erkennende Sprache kommt. Um eine Vermischung zu verhindern, wird hiermit ein Verfahren zur Unterscheidung der richtigen von der falschen gesprochenen Sprache angegeben. Insbesondere ist der Pegel des Sprechers, dessen Sprache zu erkennen ist, zumeist deutlich höher, als Sprache von dem Störgeräusch, das zumeist aus dem Hintergrund kommt. Somit kann anhand des Lautstärkepegels des Sprechers, dessen Sprache erkannt werden soll, diese von dem Hintergrundgeräusch unterschieden werden.

Ferner wird zur Lösung der Aufgabe eine Anordnung zum Erkennen von Sprache angegeben, die eine Prozessoreinheit aufweist, die derart eingerichtet ist, daß

a) anhand von Wortgrenzen Wörter und Pausen in der Sprache bestimmbar sind;
b) eine mittlere Ruhelautstärke (Si-Level) während der Pausen ermittelbar ist;
c) eine mittlere Wortlautstärke (Wo-Level) für die Wörter ermittelbar ist;
d) eine Differenz ($\Delta$) zwischen der mittleren Wortlautstärke (Wo-Level) und der mittleren Ruhelautstärke (Si-Level) bestimmbar ist;
e) Sprache erkannt wird, falls die Differenz ($\Delta$) zwischen der mittleren Wortlautstärke (Wo-Level) und der mittleren Ruhelautstärke (Si-Level) größer als ein vorbestimmter Schwellwert (S) ist;
f) ansonsten keine Erkennung der Sprache durchgeführt wird.

Diese Anordnung ist insbesondere geeignet zur Durchführung des erfindungsgemäßen Verfahrens oder einer seiner vorstehend erläuterten Weiterbildungen.

Die Erfindung wird im folgenden unter Bezugnahme auf die zugehörigen Zeichnungen beispielhaft näher erläutert.

In den Zeichnungen zeigen

Fig.1  schematisch ein Verfahren zur Erkennung von Sprache in einem Flußdiagramm;

Fig.2  ein Diagramm, das einen Teil eines Signalabschnittes darstellt;

Fig.3  schematisch eine Telekommunikations-Anlage, die nach dem erfindungsgemäßen Verfahren arbeitet, in einem Blockschaltbild.

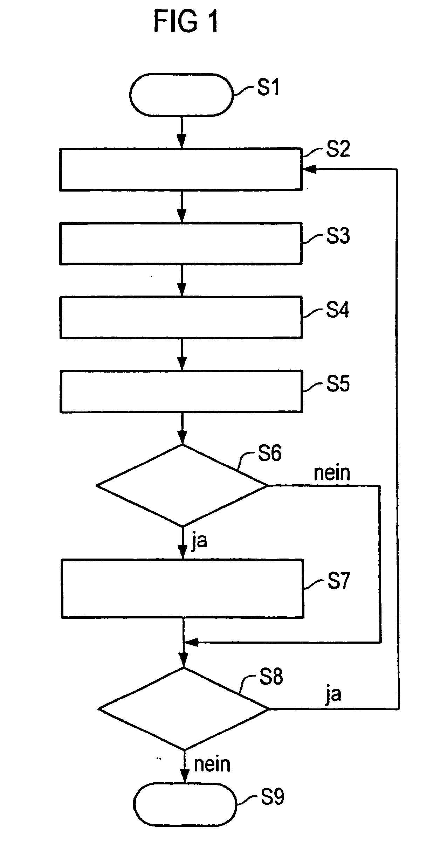

In **Fig.1** ist ein Verfahren zum automatischen Erkennen von Sprache schematisch dargestellt. Dieses Verfahren wird in der Praxis durch ein Computerprogramm realisiert, das auf einem Computer oder einer Prozessoreinheit arbeitet, die einen Eingang für ein Sprachsignal aufweist.

Das Verfahren bzw. das entsprechende Programm wird im Schritt S1 gestartet. Im folgenden Schritt S2 wird ein Wort eines Sprachsignals S analysiert. Diese Analyse erfolgt in an sich bekannter Weise, wobei das akustische Sprachsignal, das üblicherweise als in ein elektrisches Signal gewandeltes Signal vorliegt, in Wörter und Pausen segmentiert wird und die Wörter in Text gewandelt werden. Das Segmentieren des Signalabschnittes erfolgt z.B. nach dem Viterbi-Allignment-Verfahren.

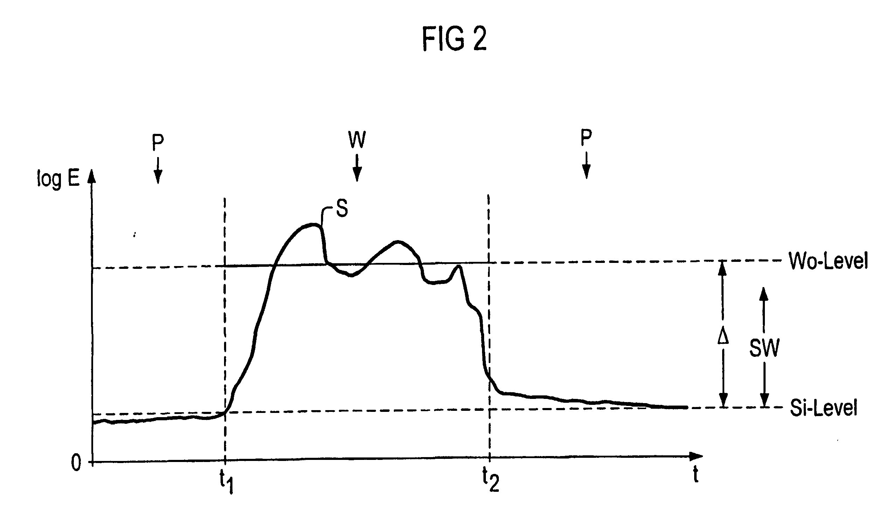

In **Fig.2** ist ein Diagramm dargestellt, das in einem Koordinatensystem einen Teil eines Signalabschnittes S zeigt. In diesem Koordinatensystem ist auf der Abszisse die Zeit t und auf der Ordinate die Lautstärke aufgetragen. Die Lautstärke ist als Logarithmus der Energie E des Signals S angegeben.

Als Lautstärke im Sinne der Erfindung wird jede physikalische Größe verstanden, die etwa proportional zur physikalischen Lautstärke ist, die in Dezibel gemessen wird. Hierzu proportionale Größen sind neben der Energie des Signals S die elektrischen Größen des in ein elektrisches Signal gewandelte akustischen Signals, wie die Spannung oder der Strom.

Bei der Segmentierung des Signalabschnittes S werden Zeitpunkte t1, t2 bestimmt, die jeweils eine Grenze zwischen einer Pause P und einem Wort W festlegen. Im dargestellten Ausführungsbeispiel ist zwischen dem Zeitpunkt 0 und t1 bzw. nach dem Zeitpunkt t2 eine Pause und zwischen den Zeitpunkten t1 und t2 stellt das Signal S ein Wort dar.

Im Schritt S3 wird eine mittlere Ruhelautstärke Si-Level bestimmt. Die mittlere Ruhelautstärke Si-Level ist der zeitliche Mittelwert der Lautstärke von einem oder mehreren Pausenabschnitten P.

Im Schritt S4 wird eine mittlere Wortlautstärke Wo-Level bestimmt. Die mittlere Wortlautstärke Wo-Level ist der zeitliche Mittelwert der Lautstärke von einem einzelnen Wortabschnitt W. D.h., daß für jedes einzelne Wort ein separater Wo-Level berechnet wird.

Im nachfolgenden Schritt S5 wird eine Differenz $\Delta$ zwischen der mittleren Wortlautstärke Wo-Level und der mittleren Ruhelautstärke Si-Level berechnet:

$$\Delta = \text{Wo-Level} - \text{Si-Level}$$

Danach wird im Schritt S6 abgefragt, ob die Differenz $\Delta$ kleiner als ein Schwellwert SW ist. Der Schwellwert SW stellt einen "Lautstärkenabstand" dar (siehe auch Fig. 2).

Ergibt diese Abfrage, daß die Differenz $\Delta$ kleiner als der Schwellwert SW ist, so bedeutet dies, daß der Lautstärkenabstand zwischen der mittleren Wortlautstärke Wo-Level und der mittleren Ruhelautstärke Si-Level kleiner als der vorbestimmte Schwellwert SW ist. Das Wort, dessen Lautstärkenabstand zwischen der mittleren Wortlautstärke Wo-Level und der mittleren Ruhelautstärke Si-Level kleiner als der vorbestimmte Schwellwert SW ist, wird als nicht korrekt erkannt beurteilt, da die Erfinder der vorliegenden Erfindung festgestellt haben, daß die Nebengeräusche in der Regel leiser als die auszuwertenden Wortsignale sind oder daß bei einem konstanten Störgeräusch (Rauschen in der Leitung, lautes Hintergrundgeräusch), bei welchen keine zufriedenstellende Spracherkennung möglich ist, der Lautstärkenabstand zwischen der mittleren Wortlautstärke und der mittleren Ruhelautstärke sehr gering ist. Wird in beiden Fällen das erfaßte Signal in einen Text gewandelt, kommt es fast immer zu einer Fehlerkennung. Ergibt die Abfrage im Schritt S6, daß die Differenz $\Delta$ kleiner als der Schwellwert SW ist, so wird der Programmablauf auf den Schritt S7 verzweigt, in dem eine Fehlerbehebung ausgeführt wird, die unten näher erläutert wird. Danach wird im Schritt S8 geprüft, ob ein weiteres Wort zu beurteilen ist. Falls das Ergebnis im Schritt S6 ist, daß die Differenz $\Delta$ größer als der Schwellwert SW ist, wird der Programmablauf direkt auf eine Abfrage im Schritt S8 verzweigt.

Mit der Abfrage im Schritt S8 wird geprüft, ob noch ein weiteres Wort zu analysieren und zu bewerten ist, und falls das Ergebnis "ja" ist, wird der Programmablauf zurück auf den Schritt S2 geführt, ansonsten wird das Programm mit dem Schritt S9 beendet.

Bei dem oben beschriebenen Ausführungsbeispiel werden die erfaßten Wörter einzeln analysiert, in Text gewandelt und bewertet. Dieses Verfahren wird als schritthaltende Erkennung bezeichnet. Hierbei ist es zweckmäßig, daß die Differenz $\Delta$ aus der mittleren Wortlautstärke Wo-Level eines Wortes W und der mittleren Ruhelautstärke Si-Level der unmittelbar vorhergehenden Pause P gebildet wird. Es ist aber auch möglich, die mittlere Ruhelautstärke der auf das Wort W folgenden Pause oder eine über die vorhergehende oder die folgende Pause gemittelte Ruhelautstärke zu verwenden.

Anstelle einer schritthaltenden Erkennung kann auch eine mehrere Wörter zusammenfassende Erkennung verwendet werden. Hierbei ist es üblich jeweils einen vollständigen Satz als Signalabschnitt aufzunehmen und dann am Stück zu analysieren (satzweise Erkennung). Bei einer solchen satzweisen Erkennung kann die Ruhelautstärke über alle Pausen P gemittelt werden, wobei jedoch die mittlere Wortlautstärke für jedes Wort W einzeln zu ermitteln ist, damit die einzelnen Wörter als korrekt oder nicht korrekt erkannt beurteilt werden können.

Bei der Fehlerbehebung im Schritt S7 gibt es je nach Anwendungsfall unterschiedliche Varianten, die einzeln oder in Kombination eingesetzt werden können.

Nach der ersten Variante werden Wörter, die als nicht korrekt erkannt beurteilt worden sind, bei der Umwandlung in einen Text nicht berücksichtigt bzw. aus diesem entfernt.

Nach der zweiten Variante der Fehlerbehebung wird bei einem als nicht korrekt erkanntem Wort eine entsprechende Nachricht an den Benutzer ausgegeben. Die Nachricht kann als akustische Nachricht (z.B.: "Das letzte Wort wurde nicht korrekt verstanden") ausgegeben werden oder als bildliche Darstellung angezeigt werden. Ersteres ist für Spracherkennungssysteme ohne Anzeige, wie z.B. Telekommunikationsanlagen mit automatischer Spracherkennung zweckmäßig, und zweiteres kann z.B. bei Diktiersystemen sinnvoll sein. Bei Diktiersystemen kann als bildliche Darstellung ein vorbestimmtes Fehl-Zeichen an der entsprechenden Stelle im Text eingesetzt werden, mit dem der Benutzer aufgefordert wird, das Wort neu zu sprechen, das dann automatisch an die Stelle des Fehl-Zeichens in den Text eingesetzt wird. Will der Benutzer hier kein Wort einsetzen kann er eine entsprechende Löschfunktion zum Beseitigen des Fehl-Zeichens betätigen.

Nach einer dritten Variante der Fehlerbehebung kann der Benutzer durch eine entsprechende Nachricht aufgefordert werden, lauter zu sprechen, damit der geforderte Lautstärkenabstand erzielt wird. Hierdurch erfolgt eine Anpassung der Spracheingabe an die akustischen Bedingungen (Geräuschpegel beim Sprecher) bzw. den Bedingungen der Übertragung (Rauschen in der Leitung) des akustischen Signals. Falls eine wiederholte Aufforderung lauter zu sprechen zu keinem besseren Erkennungsergebnis führt, kann der Benutzer auch aufgefordert werden, andere akustische Bedingungen bzw. Übertragungsbedingungen zu schaffen, indem er z.B. aufgefordert wird, von einem anderen Telefonapparat zu telefonieren, falls er über ein Telefon mit dem Spracherkennungssystem verbunden ist.

Nach einer vierten Variante der Fehlerbehebung kann bei mehreren, aufeinanderfolgend als nicht korrekt erkannt bewerteten Wörtern dies als zu geringe Qualität der Spracheingabe beurteilt und dem Benutzer mit einer entsprechenden Nachricht ausgegeben werden.

Nach einer fünften Variante der Fehlerbehebung werden die Wörter sogenannter n-best-Listen einzeln bewertet. Oftmals können einer Signalsequenz mehrere, ähnlich klingende Wörter zugeordnet werden. Diese Wörter bilden die n-best-Liste. Da sich die Grenzen zwischen den Pausen und dem jeweiligen Wort bei den einzelnen Wörtern der n-best-Liste unterscheiden, können für die einzelnen Wörter der n-best-Liste unterschiedliche mittlere Wortlautstärken und dementsprechend unterschiedliche Differenzen $\Delta$ ermittelt werden.

Die Auswahl des Wortes der n-best-Liste, das in den Text eingefügt wird, erfolgt nach an sich bekannten Match-Kriterien, wobei erfindungsgemäß die Differenz $\Delta$ als zusätzliches Match-Kriterium verwendet werden kann, wobei das Wort mit der größten Differenz $\Delta$ in den Text eingesetzt wird. Diese vierte Variante der Fehlerbehebung bildet einen selbständigen Erfindungsgedanken, der auch unabhängig von dem oben beschriebenen Verfahren bei der automatischen Auswertung von n-best-Listen eingesetzt werden kann.

Bei einer Ausführungsform der Erfindung ist der Schwellwert SW konstant.

Es ist jedoch auch möglich, den Schwellwert SW an die akustischen Bedingungen und an die Signalübertragungsbedingungen automatisch anzupassen. Bestehen hervorragende akustische Bedingungen und Signalübertragungsbedingungen, so werden in der Regel hohe Differenzen $\Delta$ erzielt, die wesentlich größer sind als konstante Schwellwerte, die für unterschiedliche Anwendungen und Bedingungen geeignet sein müssen. In einem solchen Fall ist es dann zweckmäßig, wenn der Schwellwert an die hohen Differenzen Δ angepaßt wird. So kann z.B. eine globale Differenz Δgl zwischen der mittleren Wortlautstärke mehrerer erfaßter Wörter und der mittleren Ruhelautstärke mehrerer erfaßter Pausen berechnet werden und diese globale Differenz Δgl direkt oder nach Abzug eines vorbestimmten konstanten Betrags als Schwellwert SW verwendet werden. Dies ist insbesondere in Kombination mit der ersten Variante der Fehlerbehebung von Vorteil, da hierdurch auch Nebengeräusche ausgefiltert werden können, die nur geringfügig leiser als die mittlere Wortlautstärke sind. Dies hat zur Folge, daß bei einer Spracheingabe mit hoher Qualität die Schwelle unterhalb der die Signale als nicht korrekt erkannte Wörter beurteilt werden, höher gesetzt wird, als bei einer Spracheingabe mit schlechterer Qualität. Vorzugsweise ist eine untere Grenze für den Schwellwert vorgesehen, so daß dieser nicht auf Null vermindert werden kann.

Die Höhe des variablen Schwellwertes kann auch als Qualitätsfaktor der Spracheingabe beurteilt werden. Erreicht der variable Schwellwert seine untere Grenze, so bedeutet dies, daß die Qualität der Spracheingabe relativ schlecht ist, was dem Benutzer entsprechend mitgeteilt werden kann.

Bei der Berechnung der globalen Differenz werden vorzugsweise alle Pausen und Wörter berücksichtigt, die während eines Gespräches mit dem Spracherkennungssystem gesprochen werden.

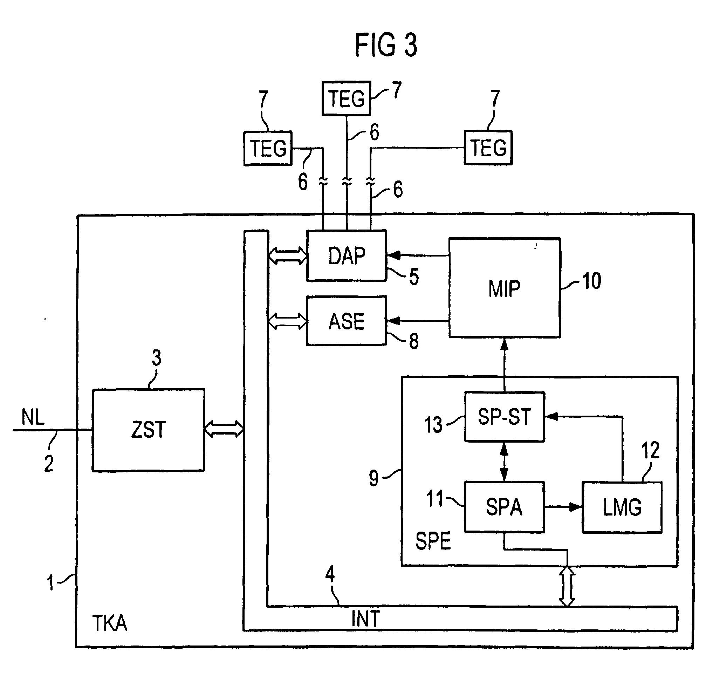

In Fig.3 ist eine Ausführungsbeispiel einer Vorrichtung zum Erkennen von Sprache dargestellt. Diese Vorrichtung ist eine Telekommunikations-Anlage 1, die über eine Netzleitung 2 mit einem Telefonnetz verbunden ist. Die Telekommunikations-Anlage 1 weist eine Teilnehmer-Zugangssteuerung 3 auf, mit welcher von außerhalb anrufende Fernsprechteilnehmer über einen internen Bus 4, einem Digital/Audio-Prozessor 5 und lokalen Telefonleitungen 6 mit einem Telefonendgerät 7 bzw. mit dem das Telefonendgerät benutzenden Benutzer verbunden werden können. Der interne Bus 4 ist mit einer Ansageeinheit 8 und einer Spracheinheit 9 verbunden. Mit der Ansageeinheit 8 können auf den Bus 4 und damit auf die Telefonleitungen 2, 6 Ansagen eingebracht werden. Die Telekommunikations-Anlage wird von einem Mikroprozessor 10 gesteuert, der mit dem Digital/Audio-Prozessor 5, der Ansageeinheit 8 und der Spracheinheit 9 verbunden ist.

Die Spracheinheit 9 ist aus einem Sprachanalysemodul 11, einem Lautstärkenmeßgerät 12 und einer Sprachsteuerung 13 ausgebildet.

Das Sprachanalysemodul 11 führt die Analyse des Sprachsignals durch, wobei das Sprachsignal in Pausen und Wörter segmentiert wird und die Wörter in Text gewandelt werden. Das Sprachanalysemodul leitet an das Lautstärkenmeßgerät 12 die einzelnen Teile (Wörter W und Pausen P) des Sprachsignals S und an die Sprachsteuerung 13 den konvertierten Text weiter. Das Lautstärkenmeßgerät ermittelt die mittlere Lautstärke (Wo-Level, Si-Level) der einzelnen Teile des Sprachsignals und gibt die entsprechenden Werte an die Sprachsteuerung 13 weiter. In der Sprachsteuerung 13 wird geprüft, ob die einzelnen Wörter korrekt erkannt worden sind (Schritt S6 in Figur 1), wobei ggfs. die Ausfilterung nicht korrekt erkannter Worte in der Sprachsteuerung 13 vorgenommen wird (erste Variante der Fehlerbehebung).

Der gefilterte oder ungefilterte Text wird von der Sprachsteuerung 13 mit weiteren zur Fehlerbehebung notwendigen Daten an den Mikroprozessor 10 weitergegeben, der den empfangenen Text und die korrespondierenden Daten auswertet.

Eine Funktion des Mikroprozessors 10 ist, die eingehenden Anrufe automatisch mit den jeweiligen Telefonendgeräten 7 zu verbinden. Die erfolgt durch Auswertung des vom Sprachsteuerung 13 empfangenen Textes und durch entsprechendes Freischalten des jeweiligen Ausgangs des Digital/Audio-Prozessors 5.

Kann der empfangene Text nicht ausgewertet werden oder ist eine Fehlerbehandlung mit Ansage (zweite, dritte oder vierte Variante) notwendig, so wird die Ansageeinheit 8 vom Mikroprozessor zur Durchführung der entsprechenden Ansage gesteuert.

In die erfindungsgemäße Telekommunikations-Anlage ist somit eine automatische Vermittlung integriert, die die eingehenden Telefongespräche selbsttätig an die jeweiligen Telefonendgeräte weiterleiten kann.

Mit der erfindungsgemäßen Telekommunikations-Anlage 1 ist es auch möglich, daß die Benutzer der Telefonendgeräte 7 die Telekommunikations-Anlage 1 mit ihrer Stimme steuern und bspw. die zu wählende Nummer sprechen, anstelle sie auf den Tasten zu tippen.

All diese Funktionen setzen eine möglichst fehlerfreie Spracherkennung voraus. Durch die Erfindung können Fehler durch Nebengeräusche, sei es durch ein Sprachsignal im Hintergrund oder durch ein kein Sprachsignal darstellendes Geräusch, wesentlich besser und auf einfachere Art und Weise als bei herkömmlichen Spracherkennungssystemen vermieden werden.

**Patentansprüche**

1. Verfahren zum Erkennen von Sprache,

   a) bei dem ein Sprachsignal in Text gewandelt wird und anhand von Wortgrenzen Wörter und Pausen in der Sprache bestimmt werden;
   b) bei dem eine mittlere Ruhelautstärke (Si-Level) während der Pausen ermittelt wird;
   c) bei dem eine mittlere Wortlautstärke (Wo-Level) für die Wörter ermittelt wird;
   d) bei dem eine Differenz (Δ) zwischen der mittleren Wortlautstärke (Wo-Level) und der mittleren Ruhelautstärke (Si-Level) bestimmt wird;
   e) bei dem Sprache erkannt wird, falls die Differenz (Δ) in der mittleren Wortlautstärke (Wo-Level) und der mittleren Ruhelautstärke (Si-Level) größer als ein vorbestimmter Schwellwert (S) ist;

f) bei dem ansonsten die Erkennung als nicht korrekt beurteilt wird.

**2.** Verfahren nach Anspruch 1,
bei dem die mittlere Ruhelautstärke und die mittlere Wortlautstärke als Logarithmus über die erfaßte Energie gemessen wird.

**3.** Verfahren nach Anspruch 1 oder 2,
bei dem eine globale Differenz zwischen der mittleren Wortlautstärke mehrerer segmentierter Wörter und der mittleren Ruhelautstärke mehrerer segmentierter Pausen berechnet wird und anhand der globalen Differenz der Schwellwert bestimmt wird.

**4.** Verfahren nach Anspruch 3,
bei dem der Schwellwert der globalen Differenz gleichgesetzt wird.

**5.** Verfahren nach Anspruch 3,
bei dem die globale Differenz um einen vorbestimmten, konstanten Betrag vermindert und der sich hieraus ergebende Lautstärkebetrag als Schwellwert verwendet wird.

**6.** Verfahren nach Anspruch 1 oder 2,
bei dem ein konstanter Schwellwert verwendet wird.

**7.** Verfahren nach einem der Ansprüche 1 bis 6,
bei dem ein Wort, für das keine Erkennung der Sprache durchgeführt wird, nicht weiter berücksichtigt wird.

**8.** Verfahren nach einem der Ansprüche 1 bis 7,
bei dem, falls keine Erkennung der Sprache durchgeführt wird, eine Nachricht an einen Benutzer ausgegeben wird.

**9.** Verfahren nach Anspruch 8,
bei dem der Benutzer mit der Nachricht aufgefordert wird, lauter zu sprechen und/oder das nicht korrekt erkannte Wort zu wiederholen.

**10.** Verfahren nach Anspruch 9,
bei dem anhand der Nachricht der Benutzer aufgefordert wird, lauter zu sprechen, damit ein ausreichender Abstand zwischen der mittleren Wortlautstärke zur mittleren Ruhelautstärke erzielt wird.

**11.** Verfahren nach einem der vorhergehenden Ansprüche,
bei dem die mittlere Ruhelautstärke jeweils für eine einzelne Pause ermittelt wird und die Differenz ($\Delta$) zwischen der mittleren Wortlautstärke (Wo-Level) des gesprochenen Wortes und der mittleren Ruhelautstärke (Si-Level) der unmittelbar vorausgehenden Pause oder der unmittelbar nachfolgenden Pause bestimmt wird.

**12.** Verfahren nach einem der vorhergehenden Ansprüche,
bei dem die mittlere Ruhelautstärke über mehrere aufeinanderfolgende Pausen gemittelt wird und diese gemittelte Ruhelautstärke bei der Bestimmung der Differenz ($\Delta$) verwendet wird.

**13.** Verfahren nach einem der vorhergehenden Ansprüche,
bei dem eine n-best-Liste erstellt wird, und jedem Wort der n-best-Liste eine Differenz ($\Delta$) zwischen der mittleren Wortlautstärke (Wo-Level) der einzelnen gesprochenen Wörter und der mittleren Ruhelautstärke (Si-Level) zugeordnet wird, und das in den Text aus der n-best-Liste einzusetzende Wort nach Maßgabe dieser Differenz ($\Delta$) zwischen der mittleren Wortlautstärke (Wo-Level) der einzelnen gesprochenen Wörter und der mittleren Ruhelautstärke (Si-Level) bestimmt wird.

**14.** Anordnung zum Erkennen von Sprache mit einer Prozessoreinheit, die derart eingerichtet ist, dass

a) ein Sprachsignal in Text gewandelt wird und anhand von Wortgrenzen Wörter und Pausen in der Sprache bestimmt werden;
b) eine mittlere Ruhelautstärke (Si-Level) während der Pausen ermittelbar ist;
c) eine mittlere Wortlautstärke (Wo-Level) für die Wörter ermittelbar ist;
d) eine Differenz ($\Delta$) zwischen der mittleren Wortlautstärke (Wo-Level) und der mittleren Ruhelautstärke (Si-Level) bestimmbar ist;
e) Sprache erkannt wird, falls die Differenz ($\Delta$) zwischen der mittleren Wortlautstärke (Wo-Level) und der mittleren Ruhelautstärke (Si-Level) größer als ein vorbestimmter Schwellwert (S) ist;
f)) ansonsten die Erkennung als nicht korrekt beurteilt wird.

**Claims**

**1.** Method for recognising speech

a) in which a speech signal is converted into text and words and pauses in the speech are determined with the aid of word boundaries,
b) in which an average silence level (Si-level) is determined during the pauses,
c) in which an average word level (Wo-level) is determined for the words,
d) in which a difference ($\Delta$) between the average

word level (Wo-level) and the average silence level (Si-level) is determined,

e) in which speech is recognised, if the difference (Δ) between the average word level (Wo-level) and the average silence level (Si-level) is greater than a predetermined threshold value (S),

f) in which otherwise recognition is evaluated as incorrect.

2. Method according to claim 1

in which the average silence level and the average word level are measured as a logarithm by way of the detected energy.

3. Method according to claim 1 or 2

in which a global difference between the average word level of a number of segmented words and the average silence level of a number of segmented pauses is calculated and the threshold value is determined with the aid of the global difference.

4. Method according to claim 3

in which the threshold value is equated to the global difference.

5. Method according to claim 3

in which the global difference is reduced by a predetermined constant amount and the volume resulting therefrom is used as the threshold value.

6. Method according to claim 1 or 2

in which a constant threshold value is used

7. Method according to one of claims 1 to 6

in which a word, for which no speech recognition is carried out, is no longer taken into account.

8. Method according to one of claims 1 to 7

in which, if a speech recognition is carried out, a message is output to a user.

9. Method according to claim 8, in which the user is prompted with the message to speak louder and/or to repeat the incorrectly recognised word.

10. Method according to claim 9, in which with the aid of the message the user is prompted to speak louder, in order to achieve an adequate gap between the average word level and the average silence level.

11. Method according to one of the preceding claims, in which the average silence level is determined for an individual pause in each instance and the difference (Δ) between the average word level (Wo-level) of the spoken word and the average silence level (Si-level) of the directly preceding pause or the directly subsequent pause is determined.

12. Method according to one of the preceding claims, in which the average silence level is taken over a number of successive pauses and this average silence level is used to determine the difference (Δ).

13. Method according to one of the preceding claims, in which an n-best list is created and a difference (Δ) between the average word level (Wo-level) of the individual spoken words and the average silence level (Si-level) is assigned to each word in the n-best list, and the word to be inserted into the text from the n-best list is determined according to this difference (Δ) between the average word level (Wo-level) of the individually spoke words and the average silence level (Si-level).

14. Arrangement for recognising speech with a processor unit which is set up such that

a) a speech signal is converted into text and words and pauses in the speech are determined with the aid of word boundaries,
b) an average silence level (Si-level) can be determined during the pauses,
c) an average word level (Wo-level) can be determined for the words,
d) a difference (Δ) between the average word level (Wo-level) and the average silence level (Si-level) can be determined,
e) speech is recognised if the difference (Δ) between the average word level (Wo-level) and the average silence level (Si-level) is greater than a predetermined threshold value (S),
f) otherwise the recognition is evaluated as incorrect.

**Revendications**

1. Procédé de reconnaissance de la parole dans lequel

a) un signal de parole est converti en texte et des mots et des pauses de la parole sont déterminés à l'aide de frontières de mots;
b) un volume sonore moyen au repos (niveau Si) est déterminé pendant les pauses;
c) un volume sonore moyen des mots (niveau Wo) est déterminé pour les mots;
d) une différence (Δ) entre le volume moyen des mots (niveau Wo) et le volume sonore moyen au repos (niveau Si) est déterminée;
e) la parole est reconnue si la différence (Δ) entre le volume sonore moyen des mots (niveau Wo) et le volume sonore moyen au repos (niveau Si) est supérieure à une valeur de seuil prédéterminée (S);
f) et dans lequel, sinon, la reconnaissance est évaluée comme non correcte.

**2.** Procédé selon la revendication 1,
dans lequel le volume sonore moyen au repos et le volume sonore moyen des mots sont mesurés sur une échelle logarithmique par l'intermédiaire de l'énergie détectée.

**3.** Procédé selon les revendications 1 ou 2,
dans lequel une différence globale entre le volume sonore moyen des mots de plusieurs mots segmentés et le volume sonore moyen au repos de plusieurs pauses segmentées est calculé, la valeur de seuil étant déterminée à partir de la différence globale.

**4.** Procédé selon la revendication 3,
dans lequel la valeur de seuil est rendue égale à la différence globale.

**5.** Procédé selon la revendication 3,
dans lequel la différence globale est diminuée d'une valeur constante prédéterminée, la valeur du volume sonore qui en résulte étant utilisée comme valeur de seuil.

**6.** Procédé selon les revendications 1 ou 2,
dans lequel on utilise une valeur de seuil constante.

**7.** Procédé selon l'une des revendications 1 à 6,
dans lequel un mot pour lequel la reconnaissance de la parole n'est pas effectuée n'est plus pris en compte.

**8.** Procédé selon l'une des revendications 1 à 7,
dans lequel, au cas où la reconnaissance de la parole n'est pas effectuée, un message est envoyé à un utilisateur.

**9.** Procédé selon la revendication 8,
dans lequel l'utilisateur est invité par le message à parler plus fort et/ou à répéter le mot qui n'a pas été reconnu correctement.

**10.** Procédé selon la revendication 9,
dans lequel le message invite l'utilisateur à parler plus fort pour obtenir un écart suffisant entre le volume sonore moyen des mots et le volume sonore moyen au repos.

**11.** Procédé selon l'une des revendications précédentes,
dans lequel le volume sonore moyen au repos est déterminé respectivement pour une pause individuelle, la différence ($\Delta$) entre le volume sonore moyen des mots (niveau Wo) du mot prononcé et le volume sonore moyen au repos (niveau Si) étant déterminée sur la pause immédiatement précédente ou sur la pause immédiatement suivante.

**12.** Procédé selon l'une des revendications précédentes,
dans lequel le volume sonore moyen au repos est déterminé en faisant la moyenne sur plusieurs pauses successives, ce volume sonore moyen au repos étant utilisé pour la détermination de la différence ($\Delta$).

**13.** Procédé selon l'une des revendications précédentes,
dans lequel on établit une liste des n meilleurs choix, une différence ($\Delta$) entre le volume sonore moyen des mots (niveau Wo) des mots individuels prononcés et le niveau sonore moyen au repos (niveau Si) est associé à chaque mot de la liste des n meilleurs choix, et le mot à insérer dans le texte à partir de la liste des n meilleurs choix est déterminé à partir de cette différence ($\Delta$) entre le volume sonore moyen des mots (niveau Wo) des mots individuels prononcés et le volume sonore moyen au repos (niveau Si).

**14.** Agencement de reconnaissance de la parole doté d'une unité de processeur qui est réalisée de telle sorte que :

a) un signal de parole est converti en texte et des mots et des pauses de la parole sont déterminés à l'aide de frontières de mots;
b) un volume sonore moyen au repos (niveau Si) peut être déterminé pendant les pauses;
c) un volume sonore moyen des mots (niveau Wo) peut être déterminé pour les mots;
d) une différence ($\Delta$) entre le volume sonore moyen des mots (niveau Wo) et le niveau sonore moyen au repos (niveau Si) peut être déterminée;
e) la parole est reconnue si la différence ($\Delta$) entre le volume sonore moyen des mots (niveau Wo) et le volume sonore moyen au repos (niveau Si) est supérieure à une valeur de seuil prédéterminée (S);
f) sinon, la reconnaissance est évaluée comme non correcte.

# FIG 1

FIG 2

EP 1 077 448 B1

FIG 3